# EUROPÄISCHE PATENTSCHRIFT

(11) **EP 3 266 153 B1**
(45) Veröffentlichungstag und Bekanntmachung des Hinweises auf die Patenterteilung: **10.04.2019**
(21) Anmeldenummer: 16705464.2
(22) Anmeldetag: 12.02.2016
(51) Int. Cl.: H04L 12/24

(54) **VERFAHREN UND SYSTEM ZUM AUFFINDEN UND/ODER ZUR ZUORDNUNG VON GERÄTEN, DIE ZUMINDEST ZEITWEISE IN WECHSELWIRKUNG MIT EINEM TELEKOMMUNIKATIONSNETZ STEHEN UND ÜBER DAS TELEKOMMUNIKATIONSNETZ ERREICHBAR SIND**
METHOD AND SYSTEM FOR FINDING AND/OR ASSOCIATING DEVICES THAT AT LEAST INTERMITTENTLY INTERACT WITH A TELECOMMUNICATION NETWORK AND ARE REACHABLE VIA THE TELECOMMUNICATION NETWORK
PROCÉDÉ ET SYSTÈME DE DÉTECTION ET/OU D'ATTRIBUTION D'APPAREILS, QUI SONT RELIÉS AU MOINS TEMPORAIREMENT EN INTERACTION AVEC UN RÉSEAU DE TÉLÉCOMMUNICATION ET PEUVENT ÊTRE JOINTS PAR LE BIAIS DU RÉSEAU DE TÉLÉCOMMUNICATION

(30) Priorität: 03.03.2015 DE 102015203745
(43) Veröffentlichungstag der Anmeldung: 10.01.2018
(73) Patentinhaber: Deutsche Telekom AG, 53113 Bonn (DE)
(72) Erfinder: KREY, Sven, 53227 Bonn (DE); SINNING, Thorsten, 60487 Frankfurt am Main (DE)
(74) Vertreter: Schwöbel, Thilo K.
(86) Internationale Anmeldenummer: PCT/EP2016/052972
(87) Internationale Veröffentlichungsnummer: WO 2016/139045

(56) Entgegenhaltungen:
- WO-A1-2011/031322
- US-A1- 2014 068 710
- US-B2- 8 473 325
- "Method and System for Identifying Unmanaged Network Devices in a Network", IP.COM JOURNAL, IP.COM INC., WEST HENRIETTA, NY, US, 23. Juni 2012 (2012-06-23), XP013152171, ISSN: 1533-0001

## Beschreibung

### Stand der Technik

Die Erfindung betrifft ein Verfahren zum Auffinden und/oder zur Zuordnung von Geräten, die zumindest zeitweise in Wechselwirkung mit einem Telekommunikationsnetz stehen und über das Telekommunikationsnetz erreichbar sind.

Die Erfindung betrifft ferner ein System und ein Crawlermodul zum Auffinden und/oder zur Zuordnung von Geräten, die zumindest zeitweise in Wechselwirkung mit einem Telekommunikationsnetz stehen und über das Telekommunikationsnetz erreichbar sind.

Die vorliegende Erfindung bezieht sich weiterhin ebenfalls auf das Gebiet der Mobilfunktechnik, insbesondere den automatisierten Informationsaustausch, der Telemetrie und Telematik.

Aus der US8473325 B2 ist ein System und Verfahren für die automatische Konfiguration und das Management von Heimnetzwerkgeräten mit einem hierarchischen Indexmodell bekannt. Darin wird ein System von Heimnetzwerkgeräten beschrieben, in dem Informationen über die Geräte, welche über einen Router mit dem Internet verbunden sind, erlangt werden können. Diese Informationen können über einen VPN Tunnel nach außen gegeben werden. Innerhalb des Netzwerks wird ein Serviceknoten installiert, mit dem die Geräte des Heimnetzwerks (die sich aus Sicht des äußeren Netzwerks hinter der Routerfirewall befinden) mit einem externen Server kommunizieren und ferner der externe Server (d.h. also von außerhalb der Routerfirewall) mit den Geräten des Heimnetzwerks kommunizieren kann.

Diese Lösung beschränkt sich darauf, dass die Geräte innerhalb eines Heimnetzes mittels eines Routers mit dem Internet verbunden sind.

Befinden sich Geräte außerhalb des Routers eigenständig in Verbindung mit dem Internet, weil sie zum Beispiel über eine eigenständige Mobilfunkanbindung mit dem Internet bestehen, können diese mit diesem System nicht erfasst werden.

Des Weiteren wird in der US 2014/068710 A1 ein Verfahren beschrieben, bei dem, zusätzlich zu einer dem Nutzer zugeordneten öffentlichen ID (z. B. einer Telefonnummer), eine eindeutige ID zu jedem Benutzergerät eines Nutzers zugeordnet wird. Ferner beschreibt "Method and System for Identifying Unmanaged Network Devices in a Network", IP.COM Journal, IP.COM INC., WEST HENRIETTA, NY, US, (2012-06-23), XP013152171, ein Verfahren zum Identifizieren von nicht verwalteten Netzwerkgeräten durch Crawling. Bekannt sind ferner Webcrawler, die - wie beim Internetsurfen - über Hyperlinks (d.h. Referenzierungen von Webseiten) von einer Webseite (bzw. von einem die Webseite zur Verfügung stellenden Servereinrichtung) zur nächsten Webseite bzw. zu weiteren Webseiten (bzw. den diese zur Verfügung stellenden Servereinrichtungen) gelangen, insbesondere unter Verwendung eines "Uniform Resource Locator" (URL). Dabei werden alle aufgefundenen Adressen bzw. Hyperlinks gespeichert und der Reihe nach durch den Webcrawler besucht, d.h. diese Webseiten werden aufgerufen. Solche Hyperlinks, die hierbei neu aufgefunden werden, werden zur Liste aller (bereits dem Webcrawler bekannten) URLs bzw. Hyperlinks hinzugefügt. Auf diese Weise können theoretisch alle verlinkten und nicht für Webcrawler gesperrten Seiten des Internets gefunden werden. Ein Webcrawler kann mithin als ein Computerprogramm bezeichnet werden, das automatisch ein Netzwerk, insbesondere das Internet bzw. das World Wide Web durchsucht sowie Webseiten analysiert.

In der Praxis wird jedoch häufig eine Auswahl getroffen und/oder der Prozess wird zu einem bestimmten Zeitpunkt beendet und erneut (d.h. von vorne) begonnen. Je nach der Aufgabe von solchen bekannten Webcrawlern, wird der Inhalt der gefundenen Webseiten beispielsweise mittels Indexierung ausgewertet und gespeichert, um ein späteres Suchen in den so gesammelten Daten zu ermöglichen.

### Offenbarung der Erfindung

Der Erfindung liegt die Aufgabe zugrunde, ein Verfahren sowie ein System derart zu schaffen, dass in einfacher Weise ein Auffinden und/oder eine Zuordnung von Geräten möglich ist und somit einem Benutzer der Geräte deren Handhabung, jedoch insbesondere deren Administration bzw. Verwaltung erleichtert wird. Die Aufgabe besteht demgemäß darin, alle Geräte, die einem Nutzer zugeordnet sind, gleichermaßen zu erfassen und zu administrieren bzw. zu verwalten.

Diese Aufgabe wird erfindungsgemäß gelöst durch ein Verfahren zum Auffinden und/oder zur Zuordnung von Geräten gemäß Anspruch 1.

Der Hauptgedanke der Erfindung liegt darin, einen Crawler anzugeben, welcher Geräte, die einem Nutzer zugeordnet sind, administriert bzw. verwaltet, auch, wenn diese teilweise eigenständig mit dem Internet verbunden sind. Ferner ist es erfindungsgemäß vorgesehen, dass solche Geräte über eine gemeinsame Plattformtechnik angesprochen werden, mithin über eine gemeinsame bzw. vereinheitlichte Benutzeroberfläche bzw. Benutzerschnittstelle, welche erfindungsgemäß insbesondere als eine grafische Benutzeroberfläche ausgestaltet ist.

Es ist dadurch gemäß der vorliegenden Erfindung in vorteilhafter Weise möglich, dass es für einen Benutzer erheblich einfacher und leichter ist, die Administrierung bzw. Verwaltung der ihm zugeordneten Geräte durchzuführen bzw. durchführen zu lassen und/oder sogar erst die Benutzung der ihm zugeordneten Geräte zu ermöglichen, insbesondere in Situationen, in denen die Benutzung des Geräts bzw. einer Mehrzahl von Geräten eine geeignete bzw. auf die Benutzung des Geräts bzw. der Geräte abgestimmte Geräte- bzw. Netzwerkkonfiguration erfordert.

Erfindungsgemäß ist es besonders bevorzugt vorgesehen, wenn die Geräte der ersten Kategorie mittels des Crawlermoduls automatisch nach Geräten der zweiten Kategorie durchsucht und/oder indiziert werden, wobei hierbei insbesondere mit den Geräten der zweiten Kategorie verbundene Schnittstellen und/oder Bedienungsoberflächen erkannt werden.

Hierdurch ist erfindungsgemäß in vorteilhafter Weise möglich, dass eine Vielzahl von Schritten, insbesondere bei der Konfiguration der Geräte bzw. bei der Anbindung der Geräte an ein Telekommunikationsnetz (sei es ein Telekommunikationsnetz wie beispielsweise ein öffentlich zugängliches Mobilfunknetz - PLMN Public Land Mobile Network), automatisiert und dadurch in einer für einen Benutzer besonders vorteilhaften, schnellen, sicheren Art und Weise erfasst und konfiguriert bzw. administriert/verwaltet werden können.

Erfindungsgemäß ist es vorgesehen, dass das Telekommunikationsnetz ein Mobilfunknetz umfasst und/oder dass das Telekommunikationsnetz ein leitungsbasiertes Telekommunikationsnetz umfasst, wobei das Mobilfunknetz ein Zugangsnetz umfasst und/oder das leitungsbasierte Telekommunikationsnetz ein leitungsbasiertes Zugangsnetz umfasst.

Es ist hierdurch in vorteilhafter Weise erfindungsgemäß möglich, dass das erfindungsgemäße Prinzip sowohl auf Mobilfunknetze, insbesondere solche, die - bevorzugt neben einem Kernnetz - ein Zugangsnetz aufweisen, als auch auf leitungsbasierte Telekommunikationsnetze (insbesondere ein sogenanntes Festnetz, bei dem normalerweise dauerhaft benötigte Verbindungen leitungsbasiert realisiert sind), insbesondere solche, die ein leitungsbasiertes Zugangsnetz aufweisen.

Erfindungsgemäß ist es vorgesehen, dass die Geräte der ersten Kategorie direkt mit dem Telekommunikationsnetz über das Zugangsnetz des Mobilfunknetzes und/oder über das leitungsbasierte Zugangsnetz des leitungsbasierten Telekommunikationsnetzes - zumindest zeitweise - verbunden sind bzw. in Wechselwirkung miteinander stehen.

Hierdurch ist es erfindungsgemäß in vorteilhafter Weise möglich, dass ein direkter Informationsaustausch bzw. Datenaustausch zwischen den Geräten der ersten Kategorie einerseits und dem Telekommunikationsnetz ermöglicht wird, wobei hierbei entweder das Zugangsnetz des Mobilfunknetzes oder aber das Zugangsnetz des leitungsbasierten Telekommunikationsnetzes Verwendung findet, wobei es erfindungsgemäß ebenfalls - zumindest für eine Teilmenge von Geräten der ersten Kategorie - möglich und bevorzugt ist, wenn ein solches Gerät sowohl unter Nutzung des Zugangsnetzes des Mobilfunknetzes als auch unter Nutzung des Zugangsnetzes des leitungsbasierten Telekommunikationsnetzes mit dem Telekommunikationsnetz in Verbindung treten kann oder in Wechselwirkung mit dem Telekommunikationsnetz treten kann. Hierbei ist es erfindungsgemäß vorgesehen, dass eine solche Wechselwirkung mit dem Telekommunikationsnetz wahlweise unter Nutzung des Zugangsnetzes des Mobilfunknetzes und/oder unter Nutzung des Zugangsnetzes des leitungsbasierten Telekommunikationsnetzes erfolgt, d.h. eine solche Wechselwirkung kann zeitgleich (d.h. parallel) vorgesehen sein oder aber auch zeitlich hintereinander (d.h. sequentiell) vorgesehen sein.

Erfindungsgemäß ist es bevorzugt vorgesehen, dass die die Gerätekennungen speichernde Datenbank oder Teile davon in einer dem Home Location Register (HLR) des Mobilfunknetzes zugeordneten Datenbank und/oder in einer dem leitungsbasierten Telekommunikationsnetz zugeordneten Datenbank gespeichert werden.

In vorteilhafter Weise hat dies erfindungsgemäß zum einen zur Folge, dass die Gerätekennungen in einer einfachen Weise gespeichert werden können und somit auch vergleichsweise schnell zur Verfügung stehen; zum anderen hat dies zur Folge, dass hierdurch ein vergleichsweise hohes Maß an Schutz gegen einen möglichen Angriff auf eine solche Datenbank - beispielsweise im Sinne eines unbefugten Zugriffs durch Dritte - gegeben ist.

Erfindungsgemäß ist es ferner besonders bevorzugt vorgesehen, dass die Datenbank - insbesondere für den Fall der Datenbank des Mobilfunknetzes - durch das Home Location Register, den AAA-Server, das IMS oder eine darauf referenzierende Datenbank repräsentiert wird.

Hierdurch ist es erfindungsgemäß in besonders vorteilhafter Weise möglich, dass der Aufwand für die Bereitstellung einer erfindungsgemäßen Datenbank vergleichsweise gering gehalten werden kann, weil die hierfür benötigten Ressourcen an ohnehin im Telekommunikationsnetz bestehende Einrichtungen - etwa bestehende Datenbanken - angebunden werden können.

Erfindungsgemäß ist es ferner in besonderer Weise bevorzugt, dass in einem ersten Teilschritt des ersten Verfahrensschritts zunächst eine Liste von Geräten der ersten Kategorie vorliegt oder generiert wird, dass in einem auf den ersten Teilschritt nachfolgenden zweiten Teilschritt des ersten Verfahrensschritts die der generierten Liste entsprechenden Geräte der ersten Kategorie auf Verbindungen mit Geräte der zweiten Kategorie untersucht werden und sukzessive Informationen - insbesondere Gerätekennungen - zu solchen Verbindungen abgerufen und in der Datenbank gespeichert werden.

Hierdurch ist es erfindungsgemäß in besonders vorteilhafter Weise möglich, dass in möglichst umfassender Weise eine Vielzahl von Geräten sowohl der ersten Kategorie (d.h. solche Geräte, die direkt mit dem Telekommunikationsnetz verbunden sind oder zumindest vorrangig (bzw. in ihrer vorrangigen Benutzungssituation oder ihre vorrangigen Benutzungsszenario) mit dem Telekommunikationsnetz verbindbar sind und zumindest zeitweise auch direkt mit dem Telekommunikationsnetz verbunden sind) als auch von Geräten der zweiten Kategorie (d.h. solche Geräte, die - zumindest vorrangig bzw. hinsichtlich ihres Hauptanwendungsbereichs bzw. ihrer Hauptanwendungssituation - nicht oder nicht dauerhaft bzw. lediglich zu einem vergleichsweise kleinen zeitlichen Anteil mit dem Telekommunikationsnetz verbunden sind, sondern vorrangig und zumindest zeitweise mit einem oder mehreren Geräten der ersten Kategorie von Geräten verbunden sind) erfassbar sind.

Erfindungsgemäß ist es ferner bevorzugt vorgesehen, dass in den in der Datenbank gelisteten Geräten der ersten Kategorie - insbesondere als Teil des zweiten Teilschritts des ersten Verfahrensschritts - wenigstens ein Servicecontainer angelegt wird, wobei in dem wenigstens einen Servicecontainer eines der Geräte der ersten Kategorie wenigstens ein Softwareprogramm installiert wird, welches nach Bedienungsoberflächen oder Schnittstellen der an das jeweilige Gerät der ersten Kategorie angeschlossenen Geräte der zweiten Kategorie sucht und/oder sich in diese einloggt sowie insbesondere Gerätekennungen von Geräten der zweiten Kategorie zur Speicherung in der Datenbank ermittelt oder generiert.

Hierdurch wird in besonders vorteilhafter Weise ermöglicht, dass in automatisierter Form und in einer für den jeweiligen Benutzer bzw. Anwender der Geräte besonders einfachen und intuitiven Form Informationen - insbesondere zur Wartung und/oder zur Administration von Geräten, insbesondere von Geräten der zweiten Kategorie, oder auch Konfigurationseinstellungen bzw. Konfigurationsdaten - erfasst und gesammelt werden können.

Weiterhin ist es erfindungsgemäß in besonders bevorzugter Weise vorgesehen, dass die Geräte der ersten Kategorie die mit ihnen verbundenen Geräte der zweiten Kategorie an die Datenbank melden, deren Schnittstelleninformationen und/oder Bedienungsoberflächeninformationen in einen Datenspeicher sammelt und der Datenbank diese Schnittstellen zugänglich macht.

Hierdurch ist es in vorteilhafter Weise möglich, dass eine möglichst umfassende Erfassung von Informationen - insbesondere von Gerätekennungen, jedoch auch von weiteren Informationen wie zum Beispiel Parameter wie eine Benutzung bzw. Bedienung von Geräten (insbesondere der zweiten Kategorie) zu erfolgen hat bzw. erfolgen kann - nicht lediglich dadurch erfolgt, dass die entsprechenden relevanten Information jeweils einzeln durch den Betrieb des Crawlermoduls in die Datenbank geschrieben werden, sondern auch dadurch, dass Geräte, insbesondere Geräte der ersten Kategorie, - entweder auf Aufforderung durch das Crawlermodul oder aber eigenständig - entsprechende Informationen wie beispielsweise Gerätekennungen oder konfigurationbezogene oder administrationsbezogene Informationen an die Datenbank übertragen bzw. der Datenbank melden.

Es ist erfindungsgemäß vorgesehen, dass in den in der Datenbank gelisteten Geräten der zweiten Kategorie wenigstens ein Servicecontainer angelegt wird.

Durch das Anlegen von Servicecontainern bzw. eines Servicecontainers in den in der Datenbank gelisteten Geräten ist es erfindungsgemäß in besonders vorteilhafter Weise möglich, dass in einer für den jeweiligen Benutzer bzw. Anwender der Geräte besonders einfachen und intuitiven Form automatisch Informationen bezüglich solcher Geräte der ersten bzw. der zweiten Kategorie erfasst und gesammelt werden können und insbesondere auch auf einem aktuellen Stand gehalten werden können. Mittels eines Servicecontainers in einem Gerät (bzw. möglichst in allen Geräten, seien es Geräte der ersten Kategorie oder Geräte der zweiten Kategorie) ist es erfindungsgemäß in besonders vorteilhafter Weise möglich, dass Aktualisierungen bzw. damit in Verbindung stehende Informationen, welche bei einem betrachteten Gerät (der ersten oder auch der zweiten Kategorie) anfallen, direkt an die Datenbank gemeldet werden können. So ist es erfindungsgemäß in vorteilhafter Weise beispielsweise möglich, dass die die Gerätekennungen (und ggf. sonstige Informationen mit Bezug auf die jeweiligen Geräte) speichernde Datenbank aufgrund des Vorhandenseins eines Servicecontainers in einem Gerät bzw. aufgrund der Aktivierung bzw. des Betriebs des Servicecontainers in einem Gerät solche aktualisierten Informationen (insbesondere Gerätekennungen, jedoch auch sonstige konfigurationsbezogene und/oder administrationsbezogene Informationen) bezüglich des jeweiligen Geräts früher erhält und/oder in einer vollständigeren bzw. konsistenteren Form erhält als dies geschehen würde, falls eine Sammlung von Geräteinformationen, insbesondere Gerätekennungen, lediglich aufgrund der Aktivität bzw. aufgrund des Betriebs des Crawlermoduls in die Datenbank gelangen würde.

Weiterhin ist es erfindungsgemäß auch vorgesehen, dass mittels der Datenbank Informationen über die mit Servicecontainern versehenen Geräte der ersten Kategorie und/oder der zweiten Kategorie ausgetauscht werden.

Durch den Austausch von Informationen unter Verwendung von Servicecontainern, die in den jeweiligen Geräten (der ersten bzw. der zweiten Kategorie) eingerichtet sind, kann erfindungsgemäß in vorteilhafter Weise nicht nur in der Richtung von den Geräten zur Datenbank erfolgen, d.h. ein Informationsfluss - insbesondere gesteuert oder veranlasst durch die Aktivität bzw. den Betrieb der Servicecontainer - vom jeweiligen Gerät zur Datenbank hin, sondern auch in der Richtung von der Datenbank zu den jeweiligen Geräten. Hierdurch ist es erfindungsgemäß in besonders vorteilhafter Weise möglich, dass die Änderung von Konfigurationen oder sonstigen Einstellungen bzw. die Administration einer Vielzahl von Geräten für einen Benutzer der Geräte in erheblichem Maße vereinfacht werden kann.

Gemäß der vorliegenden Erfindung ist es weiterhin bevorzugt vorgesehen, dass die Servicecontainer der Geräte der ersten Kategorie regelmäßig Informationen von den Bedienungsoberflächen oder Schnittstellen der angeschlossenen Geräte der zweiten Kategorie abfragen.

Erfindungsgemäß ist es hierdurch in vorteilhafter Weise möglich, dass Informationen bezüglich einer Vielzahl von mit dem Telekommunikationsnetz in Wechselwirkung stehenden Geräten mit vergleichsweise geringem Aufwand und in einer für den Benutzer oder Anwender der Geräte einfachen und intuitiven Art und Weise an die Datenbank gemäß der vorliegenden Erfindung übertragen werden können, insbesondere Aktualisierungen solcher gerätebezogener Informationen wie zum Beispiel Gerätekennungen, konfigurationsbezogene Daten und/oder administrationsbezogene Informationen.

Ein weiterer Gegenstand der vorliegenden Erfindung ist ein System zum Auffinden und/oder zur Zuordnung von Geräten gemäß Anspruch 9.

Es wird hierdurch gemäß der vorliegenden Erfindung - insbesondere mit Blick auf das erfindungsgemäße System - für einen Benutzer erheblich einfacher und leichter, die Administrierung bzw. die Verwaltung der ihm zugeordneten Geräte durchzuführen, insbesondere in automatisierter bzw. jedenfalls stark erleichterter bzw. unterstützter Form, bzw. durchführen zu lassen und/oder sogar erst die Benutzung der ihm zugeordneten Geräte zu ermöglichen.

Weiterhin bezieht sich die vorliegende Erfindung auch auf ein Crawlermodul zum Auffinden und/oder zur Zuordnung von Geräten gemäß Anspruch 10.

Es wird hierdurch gemäß der vorliegenden Erfindung - insbesondere mit Blick auf das erfindungsgemäße Crawlermodul - mit vergleichsweise geringem technischen und/oder finanziellen Aufwand möglich, für eine möglichst große Anzahl von verschiedenen Geräten, die verschiedenen Benutzern zugeordnet sind oder zuordenbar sind, möglichst detaillierte Informationen, insbesondere Gerätekennungen, in einer Datenbank zu sammeln, um diese gesammelten Informationen für die an der Nutzung der in der Datenbank gespeicherten Informationen interessierten Benutzer bereitzuhalten.

Ferner wird ein Telekommunikationsendgerät offenbart, welches geeignet ist zur Verwendung in einem erfindungsgemäßen System oder in einem erfindungsgemäßen Verfahren, wobei das Telekommunikationsendgerät ein Gerät der ersten Kategorie und/oder ein Gerät der zweiten Kategorie ist.

Hierdurch ist es in vorteilhafter Weise möglich, ein solches Telekommunikationsendgerät im Sinne des erfindungsgemäßen Verfahrens zu benutzen und damit den Aufwand zur Konfiguration und/oder zur Administration für einen Benutzer möglichst gering zu halten.

Ferner wird ein Telekommunikationsnetz offenbart, welches geeignet zur Verwendung in einem erfindungsgemäßen System oder in einem erfindungsgemäßen Verfahren, wobei das Telekommunikationsnetz die Datenbank aufweist oder dem Telekommunikationsnetz die Datenbank zugeordnet ist.

Ferner wird eine Datenbank offenbart, wobei die Datenbank geeignet ist zur Verwendung in einem erfindungsgemäßen System oder in einem erfindungsgemäßen Verfahren.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung und/oder auf einem programmierbaren Telekommunikationsendgerät und/oder einem Crawlermodul und/oder einer Datenbank und/oder einem Netzwerkknoten eines Telekommunikationsnetzes, insbesondere teilweise auf einer programmierbaren Einrichtung und/oder teilweise auf einem programmierbaren Telekommunikationsendgerät und/oder teilweise auf einem Crawlermodul und/oder teilweise auf einer Datenbank und/oder teilweise auf einem Netzwerkknoten des Telekommunikationsnetzes, ausgeführt wird.

Weiterhin ist ebenfalls Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder auf einem programmierbaren Telekommunikationsendgerät und/oder einem Crawlermodul und/oder einer Datenbank und/oder einem Netzwerkknoten eines Telekommunikationsnetzes, insbesondere teilweise auf einer programmierbaren Einrichtung und/oder teilweise auf einem programmierbaren Telekommunikationsendgerät und/oder teilweise auf einem Crawlermodul und/oder teilweise auf einer Datenbank und/oder teilweise auf einem Netzwerkknoten des Telekommunikationsnetzes, ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

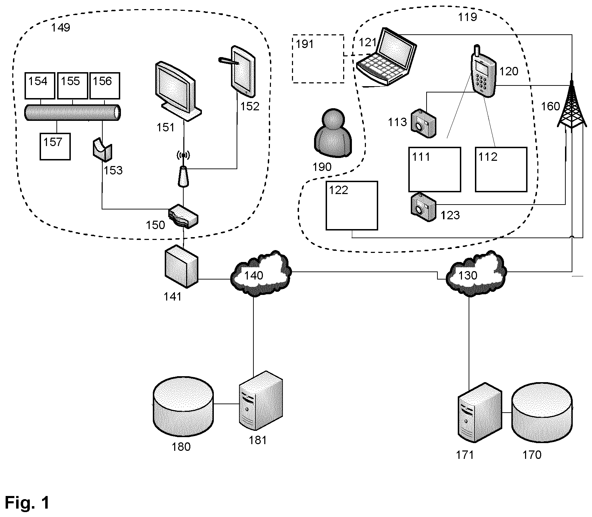

- **Figur 1**: zeigt eine schematische Ansicht eines erfindungsgemäßen Systems umfassend eine Vielzahl von einem Nutzer zugeordneten oder einem Benutzer zuordenbaren Geräten bzw. Telekommunikationsendgeräten sowie ein Telekommunikationsnetz und eine Datenbank zur Speicherung von gerätebezogenen Informationen, insbesondere Gerätekennungen.

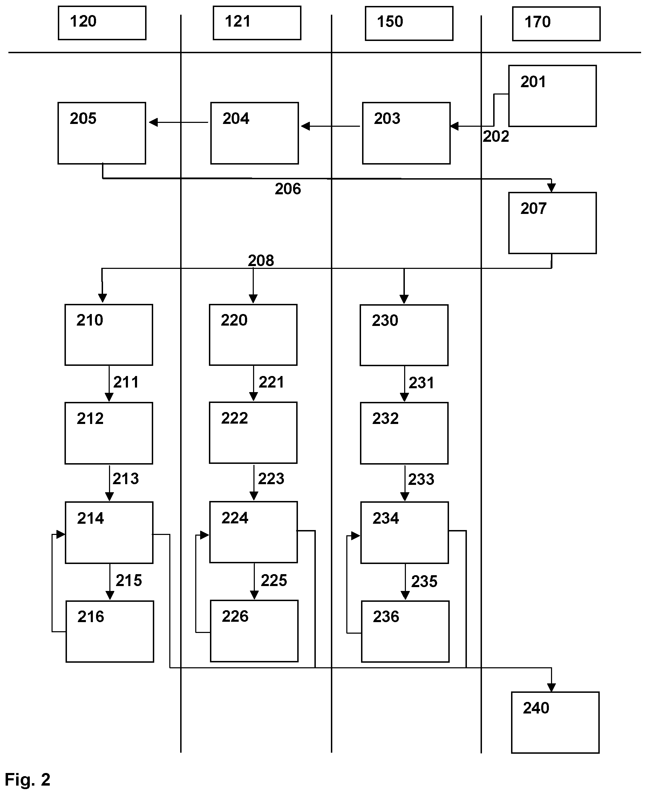

- **Figur 2**: zeigt ein Verfahren zur Nutzung eines Crawlermoduls bzw. eines Crawlers zur Speicherung von Informationen in einer Datenbank, beispielsweise zur Erlangung des Zugangs zu verschiedenen Geräten bzw. Telekommunikationsendgeräten, die einem Nutzer zugeordnet werden können und teilweise eigenständig mit dem Telekommunikationsnetz, beispielsweise dem Internet, verbunden sind.

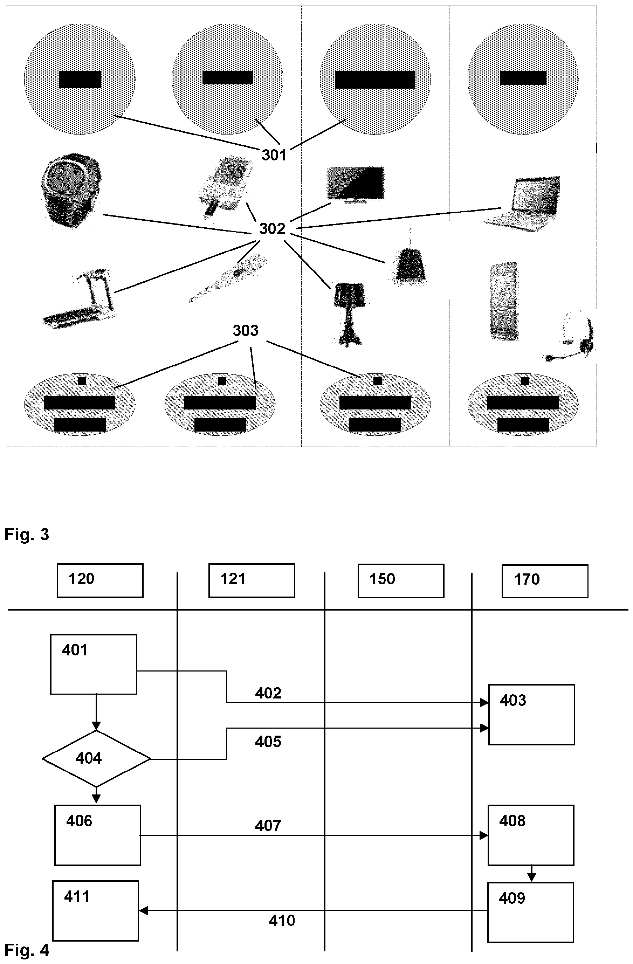

- **Figur 3**: zeigt eine beispielhafte Möglichkeit der Ausgestaltung einer nach Gerätegattungen strukturierte bzw. gestaltete Bedienungsoberfläche, die als Beispiel für eine graphische Benutzeroberfläche zur Verwaltung bzw. Administration der verschiedenen Geräte dient.
- **Figur 4**: zeigt ein Verfahren zur Anmeldung eines Geräts bzw. eines Telekommunikationsendgeräts, beispielsweise eines Bluetooth-Gerätes, an der erfindungsgemäßen Datenbank, beispielsweise im HLR (Home Location Register) oder einer mit dem HLR verbundenen Datenbank, wobei das Gerät bzw. das Telekommunikationsendgerät mit einem Telefon, beispielsweise einem Smartphone, verbunden ist.

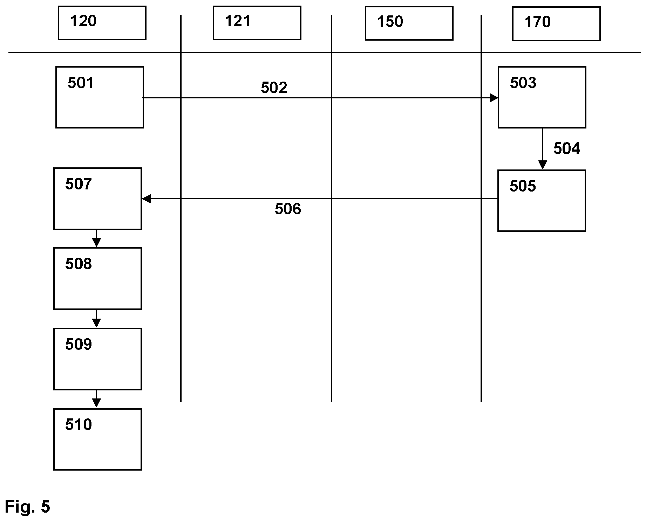

- **Figur 5**: zeigt ein Verfahren zur Abmeldung Geräts bzw. eines Telekommunikationsendgeräts, beispielsweise eines Bluetooth-Gerätes, an der erfindungsgemäßen Datenbank, beispielsweise im HLR (Home Location Register) oder einer mit dem HLR verbundenen Datenbank, wobei das Gerät bzw. das Telekommunikationsendgerät mit einem Telefon, beispielsweise einem Smartphone, verbunden ist.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist ein System gemäß der vorliegenden Erfindung dargestellt. Ein Nutzer 190 hat eine Anzahl von Geräten bzw. Telekommunikationsendgeräten, die ihm oder ihr zugeordnet sind bzw. zugeordnet werden können bzw. zuordenbar sind. Bei solchen Telekommunikationsendgeräten bzw. Geräten handelt es sich beispielsweise um Geräte, die selbstständig mit einem Telekommunikationsnetz, beispielsweise ein Funknetz 160 (bzw. ein Mobilfunknetz 160 bzw. das Zugangsnetz 160 eines Mobilfunknetzes 130), verbunden sind, und in diesem Fall typischerweise eine SIM (Subscriber Identity Module für "Teilnehmer-Identitätsmodul") Karte oder ein SIM Modul enthalten. Das Funknetz 160 wird auch als Zugangsnetz bzw. als Radio Access Network (RAN) bezeichnet. Die Geräte mit SIM Karte sind Geräte einer ersten Kategorie, wie beispielsweise ein Laptop mit SIM Karte 121, ein Smartphone mit SIM Karte 120, eine Kamera mit SIM Karte 123, oder ein am Körper getragenes Gerät, wie z.B. ein Temperatursensor 122 mit einer SIM Karte oder aber auch mit einer eSIM Karte, d.h. also einer sogenannten embedded SIM Karte. Die SIM-Karte ist beispielsweise eine einen Chip aufweisende Karte (d.h. also eine Chipkarte), die in eine entsprechende Aufnahme eines Mobiltelefons eingesteckt wird und zur Identifikation des Nutzers innerhalb des Telekommunikationsnetzes, insbesondere des Mobilfunknetzes 130, dient. Mit einer solchen SIM Karte (bzw. auch einer eSIM Karte bzw. einem eSIM-Modul) stellen Mobilfunkanbieter ihren jeweiligen Nutzern bzw. Teilnehmern mobile Dienste, beispielsweise Telefonanschlüsse und Datenanschlüsse, zur Verfügung. Im Kontext der vorliegenden Erfindung soll eine UICC (Universal Integrated Circuit Card) Karte ein Synonym für eine SIM Karte darstellen. Die Bezeichnung Nutzer 190 bezeichnet gleichwohl einen Kunden oder eine Kundin eines Telekommunikation Service Providers, in der Regel also den Inhaber eines Endgerätes, welcher einen Endkundenvertrag mit dem Telekommunikation Service Provider geschlossen hat oder dem im Rahmen des Vertrages die Nutzung des Gerätes durch den Endkundenvertrag mit dem Nutzer gestattet ist. Hierbei werden die Begriffe Nutzer/Nutzerin, Benutzer/Benutzerin, Benutzende/Benutzender und Kunde/Kundin synonym verwendet.

Des Weiteren gibt es eine Anzahl von Geräten einer zweiten Kategorie. Geräte dieser zweiten Kategorie weisen in der Regel keine SIM Karte auf, sondern stehen über einen Nahbereichsfunk in Verbindung mit Geräten der ersten Kategorie. Der Nahbereichsfunk kann beispielhaft durch Verbindungen gemäß einer oder mehrerer der folgenden Drahtlos-Kommunikationsstandards bzw. in einem oder mehreren der folgenden Frequenz- oder Funkbänder realisiert werden: Bluetooth, Wifi, WLAN, Funkstandards in Bereich der lizenzfreien Funkbänder für industrielle, wissenschaftliche und medizinische Anwendung (ISM Funkbänder), Funkbänder für die Nutzung Short Range Devices (SRD Funkbänder). Auch solche Geräte (der zweiten Kategorie) sind dem Nutzer 190 zuzuordnen bzw. können dem Nutzer 190 bzw. Benutzer zugeordnet werden, im schematisch dargestellten Beispiel gemäß Figur 1 beispielsweise eine Webcam 113 (d.h. eine über eine Kommunikationsverbindung, insbesondere eine Drahtlosverbindung, angebundene Kameraeinrichtung), ein Headset 111 (d.h. eine Kopfhörereinrichtung mit oder ohne eine integrierte oder angebundene Mikrofoneinrichtung) oder ein (mit einer elektrischen oder elektronischen Einrichtung, beispielsweise ein Sensor, versehenes Kleidungsstück wie etwa ein T-Shirt 112.

Alle diese verschiedenen Geräte bzw. Telekommunikationsendgeräte sind letztendlich direkt oder indirekt - und zumindest zeitweise bzw. temporär - mit dem Zugangsnetz 160 des Mobilfunknetzes 130 verbunden, d.h. über das Mobilfunknetz 130 mit dem Telekommunikationsnetz verbunden. Zusammengefasst sind diese Geräte in Figur 1 mittels einer ersten gestrichelten Linie zusammengefasst und mit dem Bezugszeichen 119 bezeichnet.

Über die mit dem Bezugszeichen 119 bezeichneten Geräte bzw. Telekommunikationsendgeräte hinaus werden erfindungsgemäß weitere Geräte betrachtet, die direkt oder indirekt mit einem drahtgebundenen bzw. leitungsbasierten Telekommunikationsnetz - ebenfalls zumindest zeitweise oder temporär - verbunden sind bzw. mit diesem in Wechselwirkung treten. Diese Geräte sind in der Figur 1 mittels einer zweiten gestrichelten Linie zusammengefasst und mit dem Bezugszeichen 149 bezeichnet. Typischerweise sind diese mit dem Bezugszeichen 149 zusammengefassten Geräte beispielsweise drahtlos (etwa über eine WLAN- oder Wifi-Verbindung) oder auch drahtgebunden (etwa durch eine Verbindung über eine Ethernet-Leitung oder über einen Glasfaseranschluss), insbesondere über einen Router 150 und/oder über ein Zugangsnetz (wofür beispielhaft ein DSLAM (Digital Subscriber Line Access Multiplexer) 141 steht) mit dem Internet 130 (bzw. einem sonstigen drahtgebundenen bzw. leitungsbasierten Telekommunikationsnetz 130) verbunden. Somit sind die mit dem Bezugszeichen 149 zusammengefassten Geräte typischerweise unabhängig von einem Mobilfunknetz 130 mit dem Telekommunikationsnetz 140 verbunden oder aber verbindbar. Auch die mit dem Bezugszeichen 149 zusammengefassten Geräte bzw. Telekommunikationsendgeräte sind typischerweise einem Nutzer 190 zuordenbar bzw. zugeordnet.

Im in der Figur 1 lediglich beispielhaft dargestellten Ausführungsbeispiel gilt das soeben für die mit dem Bezugszeichen 149 zusammengefassten Geräte für die folgenden Geräte: einen Rechner bzw. einen Computer, wie beispielsweise ein Tablet PC 152 oder ein sonstiger Rechner, ein Fernsehgerät bzw. ein TV-Gerät 151, Geräte zur Beleuchtung 154 beispielsweise eines Hauses oder einer Wohnung, Haushaltsgeräte 155, Bürogeräte 156 oder auch Spieleanwendungen 157. Für alle diese Geräte gilt, dass sie beispielhaft über eine Drahtlosverbindung direkt oder indirekt mit dem Telekommunikationsnetz 140 verbunden sind oder verbunden sein können, insbesondere unter Verwendung des Routers 150. Hierbei kann die Verbindung zum Router 150 zumindest teilweise drahtlos erfolgen, beispielsweise über eine WLAN- oder WiFi-Verbindung, wie dies beispielhaft für den Rechner 152 (bzw. den Tablet PC 152) und das Fernsehgerät bzw. ein TV-Gerät 151 schematisch angedeutet ist. Ferner kann es vorgesehen sein, dass zumindest ein Teil der mit dem Bezugszeichen 149 zusammengefassten Geräte über eine Drahtlosbrücke bzw. eine Reichweitenverlängerung für die Drahtloskommunikation (Bridge 153) an den Router 150 angebunden sind wie dies in Figur 1 beispielhaft für die Geräte zur Beleuchtung 154 (beispielsweise eines Hauses oder einer Wohnung), die Haushaltsgeräte 155, die Bürogeräte 156 bzw. für die Spieleanwendungen 157 schematisch angedeutet ist.

Zusammengefasst ist es im Kontext der vorliegenden Erfindung vorgesehen, dass Geräte, die einem Nutzer 190 zugeordnet werden können bzw. einem Nutzer 190 zugeordnet sind bzw. zuordenbar sind, die folgenden Geräte sein können:
-- Geräte, zu denen der Kunde bzw. Nutzer 190 eine SIM Karte mit einem Vertrag mit einem Mobilfunkanbieter bzw. Mobilfunkprovider (d.h. der Betreiber eine Mobilfunknetzes 130) hat,
-- Geräte, in die eine eSIM Karte eingebaut ist und die vom Kunden bzw. vom Nutzer 190 im Netz eines Mobilfunkanbieter bzw. Mobilfunkprovider betrieben werden bzw. betrieben werden können,
-- Geräte, bei denen sich die Kundin bzw. der Kunde bzw. generell die oder der Nutzer 190 mit Credential-Informationen (Zugangsinformationen, insbesondere ein Benutzername und ein zugehöriges Kennwort) wie beispielsweise durch Eingabe von Name, Email-Adresse und/oder Passwort oder aber über biometrische Identifikationsdaten angemeldet hat, wobei die jeweiligen Geräte bzw. Telekommunikationsendgeräte mittels dieser Credential-Informationen bzw. Zugangsinformationen der Kundin bzw. dem Kunden bzw. generell der oder dem Nutzer 190 zugeordnet werden oder zuordenbar sind,
-- Geräte, welche die Kundin bzw. der Kunde bzw. generell die oder der Nutzer 190 mit anderen Geräten zusammengeführt hat, zum Beispiel im Rahmen einer Registrierung, eines Synchronisierens oder eines Pairings.

Geräte der ersten Kategorie sind in der Regel dadurch bekannt, dass der Kunde bzw. die Kundin bzw. der Nutzer 190 einen Vertrag mit einem Mobilfunk-Provider hat. Über den Eintrag in das Home Location Register HLR ist bekannt, wo sich die Geräte aufhalten, und sie können jederzeit erreicht werden. Die Kundin oder der Kunde, also der Nutzer, 190 kann allerdings über Bluetooth per Funk Geräte (z.B. 111, 112, 113) mit seinen Smartphone 120 verbinden, ohne dass diese Geräte dem Mobilfunknetz 130 bekannt sind. Jedoch ist es im Interesse des Nutzers 190, dass Geräte, die mit seinem Smartphone 120 verbunden sind, bestmöglich durch das Mobilfunknetz 130 unterstützt werden.

Erfindungsgemäß wird aus dem Mobilfunknetz heraus ein Crawler bzw. ein Crawlermodul zur Verfügung gestellt, welches Geräte (der zweiten Kategorie), die mit den Geräten mit SIM Karte (d.h. den Geräten der ersten Kategorie) verbunden sind, auflistet. Diese Geräte (der zweiten Kategorie) haben in aller Regel auch eine Bedienungsoberfläche GUI (Graphical User Interface, grafische Benutzeroberfläche) oder eine Schnittstelle wie etwa eine Programmierschnittstelle API (Application Programming Interface). Die Programmierschnittstelle API kann verschlüsselt oder proprietär sein und aus diesem Grund geschützt sein. In der Regel haben die Geräte aber auch eine Bedienungsoberfläche, wie z.B. eine graphische Bedienungsoberfläche (GUI) über die sie von dem Nutzer bedient werden können. Wird diese Bedienungsoberfläche durch das Programm des Crawlers bzw. des Crawlermoduls erkannt, können Informationen, die auf der Bedienungsoberfläche angezeigt werden oder Informationen (bzw. Eingabefelder), deren Eingabe erwartet werden, indiziert und in einer Datenbank, beispielsweise einer im HLR (Home Location Register) befindlichen Datenbank oder einer dem HLR zugeordneten Datenbank abgespeichert werden.

Der Crawler bzw. das Crawlermodul installiert auf den von ihm besuchten Geräten Informationen, insbesondere Softwarecodes, welche im Kontext der vorliegenden Erfindung als Servicecontainer bezeichnet werden. In solchen Servicecontainern bzw. in Datenstrukturen, die solche Servicecontainer auf den jeweiligen Geräten bereitstellen können erfindungsgemäß Informationen bzw. Daten abgelegt bzw. gespeichert werden, wie z.B. Zugangsdaten, Besuchsdaten, Zustandsdaten etc. Die Servicecontainer dienen auch dazu, die Verbindung zu dem HLR oder an die HLR angeschlossene Datenbank gesichert, d.h. in abgesicherter und ein hohes Sicherheitsniveau gegenüber missbräuchlicher Benutzung aufweisenden Form aufrechtzuerhalten.

Erfindungsgemäß ist es vorgesehen, dass der Crawler bzw. das Crawlermodul auch im Internet 140 Geräte auffinden kann, welche dem Nutzer 190 zuzuordnen sind, wie z.B. den Router 150 des Festnetzanschlusses des Kunden 190. Auch kann der Crawler bzw. das Crawlermodul Geräte, die mit dem Nutzer 190 über den Router 150 in Verbindung stehen, indizieren. Im Beispiel der in Figur 1 dargestellten Situation beispielsweise das TV Gerät 151 und/oder der Rechner oder Computer bzw. den Tablet PC 152. Auf dem Router 150 lassen sich somit Informationen auslesen, welche Geräte von diesem Router 150 eine IP Adresse beziehen.

Der Crawler bzw. das Crawlermodul installiert auf dem Router einen Servicecontainer. Der Servicecontainer ermöglicht darüber hinaus auch einen Fernwartungszugang in das Drahtlosnetz (beispielsweise ein WLAN bzw. Wifi-Netz) des Benutzers 190. Auch beim Wechsel der beispielsweise dynamisch vergebenen IP Adresse (d.h. vom Router 150 innerhalb des beispielhaft dargestellten Heimnetzes des Nutzers 190 einem angebundenen Gerät dynamisch vergebenen IP-Adresse) oder ähnlichen Zugangsdaten des Routers kann durch den Servicecontainer eine Verbindung des Crawlers bzw. des Crawlermoduls mit dem Heimnetz ermöglicht werden. Diese Daten können nun auf einer Datenbank 180 im Internet gespeichert werden, wobei die Datenbank 180 beispielsweise über eine Gateway-Einrichtung 181 mit dem Internet 140 bzw. dem leitungsbasierte Telekommunikationsnetz 140 verbunden ist. Alternativ oder kumulativ hierzu können diese, vom Crawler bzw. dem Crawlermodul generierten bzw. gesammelten Daten auch im Mobilfunknetz 130 abgespeichert werden. Diese Daten werden in einem solchen Fall beispielsweise von einem Netzknoten des Mobilfunknetzes 130 bzw. einem dem Mobilfunknetz 130 zugeordneten Netzknoten, beispielsweise der GGSN (Gateway GPRS Support Node) 171, im Bereich des Home Location Register HLR 170, in dem Home Location Register/Home Subscriber Server HSS, in dem Authentication, Authorization and Accounting (AAA) Server, in dem IP Multimedia Subsystem IMS und/oder in einer sonstigen Datenbank 170 gespeichert, die typischerweise durch das HLR oder einer der anderen Datenbanken referenziert wird oder dem HLR einer der anderen Datenbanken zugeordnet ist.

Aus den Daten, die in der Datenbank 170, 180 gespeichert sind, können nun Informationen für die Nutzerin 190 bzw. den Nutzer 190 generiert werden, wie beispielsweise eine Plattform - etwa in Form einer grafischen Benutzeroberfläche oder einer sonstigen zusammengefassten Zugriffsmöglichkeit -, welche sämtliche Informationen der dem Nutzer 190 zugeordneten Geräte 119, 149 enthält.

Eine Applikation 191, insbesondere mit einer grafischen Bedienungsoberfläche, dient dazu, dem Nutzer 190 bzw. bzw. der Nutzerin 190 die Geräte in seinem bzw. ihrem Haushalt anzuzeigen, so dass er bzw. sie in der Lage ist diese selbst zu verwalten. Beispielhaft kann diese Applikation 191 über den Bildschirm auf einem Rechner 121 abgerufen werden.

Diese Applikation 191 kann natürlich in gleicher Weise auch auf dem TV Gerät 151, auf einem Tablet PC 152, auf dem Smartphone 120 oder auf einem anderen geeigneten Gerät bzw. auch einer Mehrzahl von anderen geeigneten Geräten abgerufen werden. Ein Beispiel für eine solche Applikation 191 bzw. für eine solche grafische Benutzeroberfläche ist in Figur 3 schematisch dargestellt. Insbesondere ist es erfindungsgemäß bevorzugt möglich, dass die Daten der durch einen Nutzer 190 selbst verwalteten Geräte in bestimmter vorgegebener oder aber konfigurierbarer Weise thematisch geordnet bzw. thematisch zugeordnet angezeigt werden wie in einen Komplex, der sich beispielsweise der Haussteuerung widmet und/oder einen Komplex, der sich einer sportlichen Betätigung und/oder gesundheitlichen Betätigung bzw. Überwachung widmet und/oder eine Komplex, der sich Sicherheitsaspekten bzw. einer Alarmanlage bzw. auch einer Büroanwendung widmet.

Es ist ferner sowohl bei dem erfindungsgemäßen Verfahren als auch bei dem erfindungsgemäßen System darüber hinaus vorgesehen, dass der Nutzer 190 bzw. die Nutzerin 190 insbesondere in Form von in ein Kleidungsstück integrierte bzw. befestigte tragbare elektronische Vorrichtungen, sogenannte Wearables, nutzt, insbesondere in Form von Kleidungsstücken, welche über insbesondere eine Drahtlosschnittstelle, insbesondere eine Funkschnittstelle, entweder direkt mit dem Telekommunikationsnetz 130, 140, beispielsweise dem Internet 140 oder dem Mobilfunknetz 130, oder aber mit diesem über das Smartphone 120 in Verbindung stehen, und welche durch den Crawler bzw. das Crawlermodul nach der Aktivierung direkt erkannt werden und anschließend dem Nutzer 190 bzw. der Nutzerin 190 und somit mithin dessen bzw. deren Smartphone 120 zugeordnet werden.

Nicht identische (als solche Wearables ausgestaltete) Kleidungsstücke, wie etwa Unterwäsche, können beispielsweise täglich gewechselt werden (wenn sie mit baugleichen (jedoch unterscheidbaren) eSIM Karten und Radiomodulen ausgestattet sind), ohne dass die logische Verknüpfung der Kleidungsstücke zu dem jeweiligen Smartphone 120 des Nutzers 190 bzw. der Nutzerin 190 geändert werden müsste. Dieses erleichtert z.B. den Einsatz dieser Technik in Krankenhäusern, indem Bettwäsche oder Kleidung etwa in die Lage versetzt werden beispielsweise medizinische Daten aufzunehmen, jedoch täglich gewechselt und gewaschen werden müssen. Dabei unterstützt es der Crawler bzw. das Crawlermodul, die logische Verbindung z.B. der Temperatur- oder Insulinmessung die einem Nutzer zugeordnet ist, logisch zu unterstützten.

In Figur 2 ist schematisch ein Verfahren zur Nutzung des Crawlermoduls bzw. eines Crawlers zur Speicherung von Informationen in der Datenbank, beispielsweise zur Erlangung des Zugangs zu verschiedenen Geräten bzw. Telekommunikationsendgeräten, die einem Nutzer zugeordnet werden können und teilweise eigenständig mit dem Telekommunikationsnetz, beispielsweise dem Internet, verbunden sind. Als die Datenbank wird in der Darstellung gemäß der Figur 2 die dem HLR (Home Location Register) zugeordnete Datenbank 170 beispielhaft aufgeführt; jedoch ist eine analoge Darstellung ebenfalls für die Datenbank 180 möglich, die einem leitungsbasierten Telekommunikationsnetz zugeordnet ist.

In einem ersten Prozessschritt 201 wird eine Liste der Geräte des Nutzers 190 erstellt. Im in Figur 2 dargestellten Beispiel handelt es sich beispielsweise um den Router 150, um ein Gerät mit SIM-Karte wie etwa der Rechner 121 sowie ein Smartphone 120. Der Crawler listet also im HLR oder einer dem HLR zugeordneten Datenbank die Geräte des Nutzers 190 auf, z.B. seinen Router 150, seine SIM Karte für das Smartphone und andere Geräte und Vorrichtungen, die mit SIM Karten ausgerüstet sind. In einem zweiten Prozessschritt 202 wird durch den Crawler bzw. das Crawlermodul sukzessive eine Abfrage an allen Geräten gemäß der erstellten Liste durchgeführt, d.h. der Crawler führt eine Abfrage der im HLR gespeicherten Geräte durch; im beispielhaft dargestellten Fall also dem Smartphone 120, dem Gerät mit SIM Karte 121 und dem Router 150. Zur Durchführung der Abfrage wird beispielhaft in einem dritten Prozessschritt 203 der Router 150 angefragt und die Liste der vom Router 150 verwalteten Geräte mit User Credentials angefragt. Der Crawler verschafft sich also Zugang zu dem Router des Nutzers 190 und listet alle vom Router 150 verwalteten Geräte mitsamt ihren Eigenschaften auf. Der Crawler untersucht dabei auch Zugänge zu den Geräten bzw. verfügbare Schnittstellen API / GUI. Der Crawler kann dabei auch durch den Nutzer 190 verwaltet werden, indem z.B. der Nutzer parallel zu der Suche der Geräte auch seine Zugangsdaten hinterlegt oder eingibt. Ferner wird beispielhaft in einem vierten Prozessschritt 204 das Gerät mit SIM-Karte 121 angefragt und die Liste der vom Gerät mit SIM-Karte 121 verwalteten Geräte mit User Credentials angefragt. Der Crawler verschafft sich beispielhaft also auch Zugang zu dem Geräte mit SIM Karte 121, sofern diese aus den Kundendaten des Netzbetreibers ersichtlich sind. Gegebenenfalls kann auch eine unterstützende Nutzerbefragung nach Geräten, die mit dem Nutzer in Verbindung stehen, eingesetzt werden. Ferner wird beispielhaft in einem fünften Prozessschritt 205 das Smartphone 120 angefragt und die Liste der vom Smartphone 120 verwalteten Geräte mit User Credentials angefragt. Der Crawler verschafft sich somit beispielhaft auch Zugang zu dem Smartphone 120 und überprüft hier die Verbindungen, die das Smartphone mit anderen Geräten über Nahbereichsfunk-Schnittstellen hat. In einem sechsten Prozessschritt 206 wird ferner eine Übermittlung der Gerätekennungen der jeweils gefundenen Geräte an die Datenbank 170 - vorliegend insbesondere die im HLR des Mobilfunknetzes oder im Bereich des HLR befindliche Datenbank 170 - übertragen. Mithin werden die Daten mit den Gerätekennungen an das HLR oder einer dem HLR angeschlossene Datenbank übermittelt. In einem siebten Prozessschritt 207 befindet sich nun in der Datenbank 170 eine Liste der im dritten, vierten und fünften Prozessschritt 203, 204, 205 erkannten Geräte des Nutzers 190 sowie den aktuellen Index der Internet Protokoll Adressen (bzw. es ist die Datenbank 170 in der Lage, eine solche Liste zu erstellen bzw. zu generieren). Die Liste der Geräte wird somit in das HLR oder in eine an das HLR angeschlossene Datenbank gespeichert. Erfindungsgemäß werden die ersten bis siebten Prozessschritte 201 - 207 insbesondere rekursiv durchlaufen, d.h. basierend auf den Ergebnissen der im siebten Prozessschritt 207 erstellten bzw. aktualisierten Liste werden die dritten bis sechsten Prozessschritte 203 bis 206 wiederholt durchgeführt und die jeweiligen Ergebnisse aktualisiert. Die vorhergehenden Schritte können somit auch wiederholt und rekursiv durchlaufen werden. Zur Aktualisierung können sie auch zeitlich wiederholt auftreten.

In einem achten Prozessschritt 208 werden durch den Crawler bzw. das Crawlermodul Servicecontainer auf den einzelnen aufgelisteten Geräten angelegt. Hierzu werden parallel auf dem Smartphone 120, dem Gerät mit SIM-Karte 121 und dem Router 150 jeweils sich entsprechende Prozessschritte durchgeführt: In einem neunten Prozessschritt (der mit dem Bezugszeichen 210 auf dem Smartphone 120, mit dem Bezugszeichen 220 auf dem Gerät mit SIM-Karte 121 und mit dem Bezugszeichen 230 auf dem Router 150 bezeichnet ist) wird der Servicecontainer angelegt. Typischerweise umfassen solche Servicecontainer Softwareanteile bzw. -module, welche graphische Bedienungsoberflächen oder andere Schnittstellen der an den Router 150 bzw. an dem Smartphone 120 angeschlossenen Geräte oder graphische Bedienungsoberflächen oder andere Schnittstellen von sonstigen Geräten feststellt. Solche Servicecontainer werden typischerweise durch eine Instanz angelegt und koordiniert, welche bevorzugt in dem HLR angeordnet ist (bzw. an das HLR angeschlossen ist oder in einer von diesem referenzierten Datenbanken angeordnet ist). Ein Servicecontainer kann in der Form eines Proxy realisiert sein. Falls bereits vorhanden, kann auch ein Proxy die Dienste des Servicecontainer realisieren. Über die von dem Nutzer 190 bereitgestellten Credentials kann das Programm in dem Servicecontainer auf graphische Bedienungsoberflächen zurückgreifen und Informationen an die HLR oder an die HLR angeschlossene Datenbank 170 weiterleiten. In einem zehnten Prozessschritt (der mit dem Bezugszeichen 211 auf dem Smartphone 120, mit dem Bezugszeichen 221 auf dem Gerät mit SIM-Karte 121 und mit dem Bezugszeichen 231 auf dem Router 150 bezeichnet ist) wird eine grafische Benutzeroberfläche gesucht. In einem elften Prozessschritt (der mit dem Bezugszeichen 212 auf dem Smartphone 120, mit dem Bezugszeichen 222 auf dem Gerät mit SIM-Karte 121 und mit dem Bezugszeichen 232 auf dem Router 150 bezeichnet ist) wird - mittels der im dritten, vierten und fünften Prozessschritt 203, 204, 205 erfassten bzw. ermittelten Credential-Informationen der jeweils angebundenen Geräte ein Einlogvorgang in die grafische Benutzeroberfläche vorgenommen. In einem zwölften Prozessschritt (der mit dem Bezugszeichen 213 auf dem Smartphone 120, mit dem Bezugszeichen 223 auf dem Gerät mit SIM-Karte 121 und mit dem Bezugszeichen 233 auf dem Router 150 bezeichnet ist) werden Informationen der grafischen Benutzeroberfläche ermittelt. In einem dreizehnten Prozessschritt (der mit dem Bezugszeichen 214 auf dem Smartphone 120, mit dem Bezugszeichen 224 auf dem Gerät mit SIM-Karte 121 und mit dem Bezugszeichen 234 auf dem Router 150 bezeichnet ist) werden die ermittelten Informationen der grafischen Benutzeroberfläche in den jeweiligen Servicecontainern abgespeichert. In einem vierzehnten Prozessschritt (der mit dem Bezugszeichen 215 auf dem Smartphone 120, mit dem Bezugszeichen 225 auf dem Gerät mit SIM-Karte 121 und mit dem Bezugszeichen 235 auf dem Router 150 bezeichnet ist) werden die grafischen Benutzeroberflächen der lokal (am jeweiligen Gerät) angebundenen Geräte erfasst bzw. gescannt. In einem fünfzehnten Prozessschritt (der mit dem Bezugszeichen 216 auf dem Smartphone 120, mit dem Bezugszeichen 225 auf dem Gerät mit SIM-Karte 121 und mit dem Bezugszeichen 235 auf dem Router 150 bezeichnet ist) werden die lokalen Schnittstelleninformationen ermittelt (bzw. die lokalen Service APIs ermittelt). In einem sechzehnten Prozessschritt 240 werden die jeweils ermittelten Informationen wieder in der Datenbank 170 abgespeichert. Der jeweilige dreizehnte Prozessschritt 214, vierzehnte Prozessschritt 215 und fünfzehnte Prozessschritt 216 werden erfindungsgemäß insbesondere rekursiv durchlaufen.

Erfindungsgemäß ist es ferner bevorzugt vorgesehen, dass von der Datenbank 170 (bzw. dem HLR) auch Anfragen an Servicecontainer gerichtet werden, z.B. um das Datennetz, die Körpertemperatur, Blutdruck oder Webcam Bilder abzufragen. Diese Daten werden in dem Servicecontainer abgespeichert und der Servicecontainer scannt die lokalen Schnittstellen (GUI, API) der angeschlossenen Geräte in regelmäßigen Zeitabständen nach neuen Informationen. Solche Servicecontainer bilden damit jeweils eine lokale Service API, die durch die Datenbank 170 bzw. durch das HLR oder durch eine an die HLR angeschlossene Datenbank direkt angesprochen werden kann. Es ist ferner erfindungsgemäß vorgesehen, dass ein auf einem Gerät installierter Servicecontainer auch von diesem Geräte entfernt werden kann, so dass Daten nicht mehr weitergegeben werden können. Ein Servicecontainer kann weiterhin auch von einem Geräten entfernt werden, wenn das Gerät ausgemustert oder verkauft wird.

Erfindungsgemäß ergibt sich somit der Vorteil, dass Geräte, die mit dem Internet verbunden sind und die einem Nutzer zuzuordnen sind, automatisiert und ggf. mit seiner manuellen Einwilligung einem gemeinsamen Serviceportfolio zugeordnet werden können. Damit kann eine Vielzahl von Geräten über das Internet und Mobilfunknetz angesprochen werden, welche im Regelfall ihre Dienste auf eine lokale Webseite oder auf eine Geräte spezifischen App darstellen.

Ein solcher Dienst ist erfindungsgemäß insbesondere derart eingerichtet bzw. realisiert, dass der Mobilfunkbetreiber eine Sicherheitsvorkehrung einsetzt, damit nur berechtigte Crawler bzw. Crawlermodule Daten in den Geräten der Nutzer ablegen. So können zum Beispiel Token (Identifikationselemente) zwischen den SIM Karten der Geräte und dem Mobilfunknetz ausgetauscht werden, die auf Informationen zugreifen die bereits im Freischaltungsprozess der SIM-Karte für das Mobilfunknetz in der SIM Karte hinterlegt wurden. Ein solches Token wird nur dann zu gültigen Zugangsdaten für den Crawler, wenn jenes zwischen SIM Karte und dem Mobilfunknetz zuvor vereinbartes Geheimnis erkannt wurde. Erfindungsgemäß ist es insbesondere vorteilhaft möglich, dass das Serviceportfolio über die Datenbank 170 bzw. das HLR zentral und weltweit im Mobilfunknetz abgerufen werden. Servicecontainer auf den einzelnen Geräten erleichtern mithin die Handhabung dieser Geräte.

In Figur 3 ist eine beispielhafte Möglichkeit der Ausgestaltung einer nach Gerätegattungen strukturierte bzw. gestaltete Bedienungsoberfläche dargestellt, die als Beispiel für eine grafische Benutzeroberfläche - insbesondere eine nach Gerätegattungen gestaltete Bedienungsoberfläche - zur Verwaltung bzw. Administration der verschiedenen Geräte dient. Hierbei können z.B. Wearables, Pulsuhren, Blutdruckmessgeräte oder Fieberthermometer den funktionalen Bereichen Sport oder Gesundheit zugeordnet werden. Laufbänder können z.B. dem Bereich Sport zugeordnet werden. Haushaltsgeräte wie zum Beispiel Fernseher, Kühlschränke und Beleuchtung werden getrennt von Bürogeräten, wie z.B. Smartphone, Headset und Laptop dargestellt. In der graphischen Bedienungsoberfläche können auch Daten der Schnittstellen der einzelnen Geräte gebündelt dargestellt werden. Die Bedienungsoberflächen der einzelnen Geräte, welche auch teilweise proprietär sind, können so dem Nutzer auf einfache Weise gesammelt zur Verfügung gestellt werden, ohne dass der Nutzer jede Applikation einzeln aufrufen und bedienen muss. Der Nutzer ist in der Lage selbstständig neue Geräte einzupflegen, oder auf vorgeschlagene, durch den Crawler erkannte neue Geräte zu reagieren.

In Figur 4 ist ein Verfahren zur Anmeldung eines (neuen) Geräts bzw. eines Telekommunikationsendgeräts, beispielsweise eines Bluetooth-Gerätes, an der erfindungsgemäßen Datenbank 170, beispielsweise im HLR (Home Location Register) oder einer mit dem HLR verbundenen Datenbank, wobei das (neue) Gerät bzw. das Telekommunikationsendgerät mit einem Telefon 120, beispielsweise einem Smartphone, verbunden ist. Das neue Gerät wird von dem Crawler erkannt oder es meldet sich selbstständig bei dem Router oder dem Smartphone an.

In einem ersten Prozessschritt 401 wird am Smartphone 120 erkannt, dass ein neues Gerät an das Smartphone 120 angebunden bzw. verbunden wird. Der Servicecontainer des Smartphones 120 meldet den Zugang eines solchen Geräts. In einem zweiten Prozessschritt 402 wird die Gerätekennung bzw. die Gerätekennungen - und gegebenenfalls auch weitere Zusatzinformationen - an die Datenbank 170 bzw. das HLR übertragen. In einem dritten Prozessschritt 403 wird durch die Datenbank 170, welche die alte, vor der Anmeldung des neu erkannten bzw. neu verbundenen Geräts anwendbare Gerätekonfiguration umfasst bzw. speichert, die Gerätekonfiguration (Gerätekonfigurationsliste) entsprechend des neu anzumeldenden Geräts geändert. In einem vierten Prozessschritt 404 wird abgefragt, ob ein Servicecontainer auf dem neu erkannten bzw. neu verbundenen Gerät vorhanden ist. Falls die Antwort positiv ausfällt, wird in einem fünften Prozessschritt 405 zum dritten Prozessschritt verzweigt. Falls die Antwort negativ ausfällt, wird zu einem sechsten Prozessschritt 406 verzweigt, mittels dessen der Servicecontainer des neu erkannten bzw. neu verbundenen Geräts angelegt und registriert wird. In einem siebten Prozessschritt 407 wird die Gerätekennung des neu erkannten bzw. neu verbundenen Geräts an die Datenbank 170 bzw. das HLR übermittelt. In einem achten Prozessschritt 408 wird diese Übertragung bestätigt. In einem neunten Prozessschritt 409 wird durch die Datenbank 170, welche die alte, vor der Anmeldung des neu erkannten bzw. neu verbundenen Geräts anwendbare Gerätekonfiguration umfasst bzw. speichert, die Gerätekonfiguration (Gerätekonfigurationsliste) entsprechend des neu anzumeldenden Geräts geändert. In einem zehnten Prozessschritt 410 erfolgt der Beginn des Datenaustauschs. In einem elften Prozessschritt 411 wird dies bestätigt.

Mithin erfolgt die Anmeldung eines neuen Geräts derart, dass das Smartphone 120 erkennt, dass ein (neues) Gerät vorhanden ist, welches dem Nutzer 190 zuzuordnen ist und welches bisher noch nicht mit dem Netz verbunden war, z.B. ein neues angezogenes T-Shirt. Der Servicecontainer des Gerätes meldet den Neuzugang im ersten Prozessschritt 401 und übermittelt im zweiten Prozessschritt 402 die Gerätekennung an das HLR. Das HLR 170 oder eine an das HLR angeschlossene Datenbank speichert die bisherige Gerätekonfiguration und ändert die Gerätekonfigurationsliste im dritten Prozessschritt. Falls im vierten Prozessschritt 404 erkannt wird, dass auf dem neuen Gerät ein Servicecontainer vorhandenen ist, wird im fünften Prozessschritt 405 dieser Servicecontainer registriert, aktiviert und diesbezügliche Daten in der Datenbank 170 (insbesondere dem HLR) oder in einer an das HLR angeschlossene Datenbank gespeichert. Anderenfalls wird im sechsten Prozessschritt 406 ein Servicecontainer angelegt und registriert. Die Gerätekennung wird im siebten Prozessschritt 407 an das HLR 170 oder eine an das HLR angeschlossene Datenbank übermittelt. Das HLR 170 oder eine an das HLR angeschlossene Datenbank bestätigt dies im achten Prozessschritt 408. Die registrierten Daten werden im neuten Prozessschritt 409 im HLR 170 oder einer an das HLR angeschlossene Datenbank gespeichert. Anschließend beginnt im zehnten Prozessschritt 410 der Datenaustausch, was vom Servicecontainer des Geräts (beispielsweise des T-Shirts) im elften Prozessschritt 411 bestätigt wird.

In Figur 5 ist ein Verfahren zur Abmeldung eines Geräts bzw. eines Telekommunikationsendgeräts beispielhaft dargestellt, beispielsweise eines Bluetooth-Gerätes oder eines Abmeldens eines T-Shirts, an der erfindungsgemäßen Datenbank, beispielsweise im HLR (Home Location Register) oder einer mit dem HLR verbundenen Datenbank, wobei das Gerät bzw. das Telekommunikationsendgerät mit einem Telefon, beispielsweise einem Smartphone, verbunden ist.

In einem ersten Prozessschritt 501 meldet der Servicecontainer den Abgang des (abzumeldenden) Geräts. In einem zweiten Prozessschritt 502 wird die Gerätekennung bzw. die Gerätekennungen an die Datenbank 170 bzw. das HLR übertragen. In einem dritten Prozessschritt 503 wird durch die Datenbank 170, welche die alte, vor der Abmeldung des abzumeldenden Geräts anwendbare Gerätekonfiguration umfasst bzw. speichert, die Gerätekonfiguration (Gerätekonfigurationsliste) entsprechend des abzumeldenden Geräts geändert. In einem vierten Prozessschritt 504 wird die Änderung des Servicecontainers durchgeführt. In einem fünften Prozessschritt 505 wird der Servicecontainer des abgehenden bzw. abzumeldenden Geräts stillgelegt. In einem sechsten Prozessschritt 506 erfolgt eine Benachrichtigung des Servicecontainers. In einem siebten Prozessschritt 507 wird der Servicecontainer stillgelegt. In einem achten Prozessschritt 508 wird der Geräteabgang dem Nutzer bestätigt. In einem neunten Prozessschritt 509 wird der Servicecontainer stillgelegt. In einem zehnten Prozessschritt 510 ist die Geräteabmeldung abgeschlossen.

## Patentansprüche

1. Verfahren zum Auffinden und/oder zur Zuordnung von Geräten (119, 149), die zumindest zeitweise in Wechselwirkung mit einem Telekommunikationsnetz (130, 140) stehen und über das Telekommunikationsnetz (130, 140) erreichbar sind, wobei das Telekommunikationsnetz (130, 140) ein Mobilfunknetz (130) umfasst und/oder wobei das Telekommunikationsnetz (130, 140) ein leitungsbasiertes Telekommunikationsnetz (140) umfasst, wobei das Mobilfunknetz (130) ein Zugangsnetz (160) umfasst und/oder das leitungsbasierte Telekommunikationsnetz (140) ein leitungsbasiertes Zugangsnetz (141) umfasst, wobei in einem ersten Verfahrensschritt Gerätekennungen der Geräte (119, 149) in einer Datenbank (170, 180) gespeichert werden, wobei in einem zweiten Schritt eine Zuordnung von Geräten (119, 149) zu einem Nutzer (190) erfolgt, wobei die Geräte (119, 149) eine erste Kategorie von Geräten umfassen, die direkt mit dem Telekommunikationsnetz (130, 140) verbunden sind, wobei die Geräte der ersten Kategorie (120, 121, 122, 123, 150) direkt mit dem Telekommunikationsnetz (130, 140) über das Zugangsnetz (160) des Mobilfunknetzes (130) und/oder über das leitungsbasierte Zugangsnetz (141) des leitungsbasierten Telekommunikationsnetzes (140) zumindest zeitweise verbunden sind, wobei die Geräte (119, 149) eine zweite Kategorie von Geräten umfassen, die mit Geräten der ersten Kategorie von Geräten verbunden sind, wobei der erste Verfahrensschritt mittels eines Crawlermoduls durchgeführt wird, wobei die Geräte der zweiten Kategorie derart über das Telekommunikationsnetz (130, 140) erreicht werden, dass die Geräte der ersten Kategorie (120, 121, 122, 123, 150) mittels des Crawlermoduls nach Geräten der zweiten Kategorie durchsucht und/oder indiziert werden, wobei in den in der Datenbank (170, 180) gelisteten Geräten der zweiten Kategorie wenigstens ein Servicecontainer angelegt wird.

2. Verfahren nach Anspruch 1, **dadurch gekennzeichnet, dass** die Geräte der ersten Kategorie (120, 121, 122, 123, 150) mittels des Crawlermoduls automatisch nach Geräten der zweiten Kategorie durchsucht und/oder indiziert werden, wobei hierbei mit den Geräten der zweiten Kategorie verbundene Schnittstellen und/oder Bedienungsoberflächen erkannt werden.

3. Verfahren nach einem der vorhergehenden Ansprüche, **dadurch gekennzeichnet, dass** die die Gerätekennungen speichernde Datenbank (170, 180) oder Teile davon in einer dem Home Location Register (HLR) des Mobilfunknetzes (130) zugeordneten Datenbank (170) und/oder in einer dem leitungsbasierten Telekommunikationsnetz (140) zugeordneten Datenbank (180) gespeichert werden, wobei die Datenbank (170, 180) - für den Fall der Datenbank des Mobilfunknetzes (130) - durch das Home Location Register, den AAA-Server, das IMS oder eine darauf referenzierende Datenbank repräsentiert wird.

4. Verfahren nach einem der vorhergehenden Ansprüche, **dadurch gekennzeichnet, dass** in einem ersten Teilschritt des ersten Verfahrensschritts zunächst eine Liste von Geräten der ersten Kategorie (120, 121, 122, 123, 150) vorliegt oder generiert wird, dass in einem auf den ersten Teilschritt nachfolgenden zweiten Teilschritt des ersten Verfahrensschritts die der generierten Liste entsprechenden Geräte der ersten Kategorie (120, 121, 122, 123, 150) auf Verbindungen mit Geräte der zweiten Kategorie untersucht werden und sukzessive Gerätekennungen zu solchen Verbindungen abgerufen und in der Datenbank (170, 180) gespeichert werden.

5. Verfahren nach einem der vorhergehenden Ansprüche, **dadurch gekennzeichnet, dass** in den in der Datenbank (170, 180) gelisteten Geräten der ersten Kategorie (120, 121, 122, 123, 150) - als Teil des zweiten Teilschritts des ersten Verfahrensschritts - wenigstens ein Servicecontainer angelegt wird, wobei in dem wenigstens einen Servicecontainer eines der Geräte der ersten Kategorie (120, 121, 122, 123, 150) wenigstens ein Softwareprogramm installiert wird, welches nach Bedienungsoberflächen oder Schnittstellen der an das jeweilige Gerät der ersten Kategorie (120, 121, 122, 123, 150) angeschlossenen Geräte der zweiten Kategorie sucht und/oder sich in diese einloggt sowie Gerätekennungen von Geräten der zweiten Kategorie zur Speicherung in der Datenbank (170, 180) ermittelt oder generiert.

6. Verfahren nach einem der vorhergehenden Ansprüche, **dadurch gekennzeichnet, dass** die Geräte der ersten Kategorie (120, 121, 122, 123, 150) die mit ihnen verbundenen Geräte der zweiten Kategorie an die Datenbank (170, 180) melden, deren Schnittstelleninformationen und/oder Bedienungsoberflächeninformationen in einen Datenspeicher sammelt und der Datenbank (170, 180) diese Schnittstellen zugänglich macht.

7. Verfahren nach einem der vorhergehenden Ansprüche, **dadurch gekennzeichnet, dass** mittels der Datenbank (170, 180) Informationen über die mit Servicecontainern versehenen Geräte der ersten Kategorie (120, 121, 122, 123, 150) und/oder der zweiten Kategorie ausgetauscht werden.

8. Verfahren nach einem der vorhergehenden Ansprüche, **dadurch gekennzeichnet, dass** die Servicecontainer der Geräte der ersten Kategorie (120, 121, 122, 123, 150) regelmäßig Informationen von den Bedienungsoberflächen oder Schnittstellen der angeschlossenen Geräte der zweiten Kategorie abfragen.

9. System zum Auffinden und/oder zur Zuordnung von Geräten (119, 149), die zumindest zeitweise in Wechselwirkung mit einem Telekommunikationsnetz (130, 140) stehen und über das Telekommunikationsnetz (130, 140) erreichbar sind, wobei das System das Telekommunikationsnetz (130, 140), die Geräte (119, 149) und eine Datenbank (170, 180) umfasst, wobei das Telekommunikationsnetz (130, 140) ein Mobilfunknetz (130) umfasst und/oder wobei das Telekommunikationsnetz (130, 140) ein leitungsbasiertes Telekommunikationsnetz (140) umfasst, wobei das Mobilfunknetz (130) ein Zugangsnetz (160) umfasst und/oder das leitungsbasierte Telekommunikationsnetz (140) ein leitungsbasiertes Zugangsnetz (141) umfasst, wobei das System derart konfiguriert ist, dass Gerätekennungen der Geräte (119, 149) in der Datenbank (170, 180) gespeichert werden, wobei das System ferner derart konfiguriert ist, dass eine Zuordnung von Geräten (119, 149) zu einem Nutzer (190) erfolgt, wobei die Geräte (119, 149) eine erste Kategorie von Geräten umfassen, die direkt mit dem Telekommunikationsnetz (130, 140) verbunden sind, wobei die Geräte der ersten Kategorie (120, 121, 122, 123, 150) direkt mit dem Telekommunikationsnetz (130, 140) über das Zugangsnetz (160) des Mobilfunknetzes (130) und/oder über das leitungsbasierte Zugangsnetz (141) des leitungsbasierten Telekommunikationsnetzes (140) zumindest zeitweise verbunden sind, wobei die Geräte (119, 149) eine zweite Kategorie von Geräten umfassen, die mit Geräten der ersten Kategorie von Geräten verbunden sind, wobei das System ein Crawlermodul aufweist, wobei das System derart konfiguriert ist, dass die Geräte der zweiten Kategorie derart über das Telekommunikationsnetz (130, 140) erreicht werden, dass die Geräte der ersten Kategorie (120, 121, 122, 123, 150) mittels des Crawlermoduls nach Geräten der zweiten Kategorie durchsucht und/oder indiziert werden, wobei das System ferner derart konfiguriert ist, dass in den in der Datenbank (170, 180) gelisteten Geräten der zweiten Kategorie wenigstens ein Servicecontainer angelegt wird.

10. Crawlermodul zum Auffinden und/oder zur Zuordnung von Geräten (119, 149), die zumindest zeitweise in Wechselwirkung mit einem Telekommunikationsnetz (130, 140) stehen und über ein Telekommunikationsnetz (130, 140) erreichbar sind, wobei das Crawlermodul in einem die Geräte (119, 149) aufweisenden Telekommunikationsnetz (130, 140) mit einer Datenbank (170, 180) eingebunden ist, wobei das Telekommunikationsnetz (130, 140) ein Mobilfunknetz (130) umfasst und/oder wobei das Telekommunikationsnetz (130, 140) ein leitungsbasiertes Telekommunikationsnetz (140) umfasst, wobei das Mobilfunknetz (130) ein Zugangsnetz (160) umfasst und/oder das leitungsbasierte Telekommunikationsnetz (140) ein leitungsbasiertes Zugangsnetz (141) umfasst, wobei das Crawlermodul derart konfiguriert ist, dass Gerätekennungen der Geräte (119, 149) in einer Datenbank (170, 180) gespeichert werden, wobei das Crawlermodul ferner derart konfiguriert ist, dass in einem zweiten Schritt eine Zuordnung von Geräten (119, 149) zu einem Nutzer (190) erfolgt, wobei die Geräte (119, 149) eine erste Kategorie von Geräten umfassen, die direkt mit dem Telekommunikationsnetz (130, 140) verbunden sind, wobei die Geräte der ersten Kategorie (120, 121, 122, 123, 150) direkt mit dem Telekommunikationsnetz (130, 140) über das Zugangsnetz (160) des Mobilfunknetzes (130) und/oder über das leitungsbasierte Zugangsnetz (141) des leitungsbasierten Telekommunikationsnetzes (140) zumindest zeitweise verbunden sind, **dadurch gekennzeichnet, dass** die Geräte (119, 149) eine zweite Kategorie von Geräten umfassen, die mit Geräten der ersten Kategorie von Geräten verbunden sind, wobei das Crawlermodul derart konfiguriert ist, dass die Geräte der zweiten Kategorie derart über das Telekommunikationsnetz (130, 140) erreicht werden, dass die Geräte der ersten Kategorie (120, 121, 122, 123, 150) mittels des Crawlermoduls nach Geräten der zweiten Kategorie durchsucht und/oder indiziert werden, wobei das Crawlermodul ferner derart konfiguriert ist, dass in den in der Datenbank (170, 180) gelisteten Geräten der zweiten Kategorie wenigstens ein Servicecontainer angelegt wird.

11. Computerprogramm mit Programmcodemitteln, mit deren Hilfe alle Schritte eines Verfahrens nach einem der Ansprüche 1 bis 8 durchführbar sind, wenn das Computerprogramm auf einer programmierbaren Einrichtung und/oder auf einem programmierbaren Telekommunikationsendgerät und/oder einem Crawlermodul und/oder einer Datenbank und/oder einem Netzwerkknoten eines Telekommunikationsnetzes (130, 140), insbesondere teilweise auf einer programmierbaren Einrichtung und/oder teilweise auf einem programmierbaren Telekommunikationsendgerät und/oder teilweise auf einem Crawlermodul und/oder teilweise auf einer Datenbank und/oder teilweise auf einem Netzwerkknoten des Telekommunikationsnetzes (130, 140), ausgeführt wird.

12. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 8 durchführbar sind, wenn das Computerprogramm auf einer programmierbaren Einrichtung und/oder auf einem programmierbaren Telekommunikationsendgerät und/oder einem Crawlermodul und/oder einer Datenbank und/oder einem Netzwerkknoten eines Telekommunikationsnetzes (130, 140), insbesondere teilweise auf einer programmierbaren Einrichtung und/oder teilweise auf einem programmierbaren Telekommunikationsendgerät und/oder teilweise auf einem Crawlermodul und/oder teilweise auf einer Datenbank und/oder teilweise auf einem Netzwerkknoten des Telekommunikationsnetzes (130, 140), ausgeführt wird.

## Claims

1. Method for finding and/or for associating devices (119, 149) which interact at least intermittently with a telecommunication network (130, 140) and can be reached via the telecommunication network (130, 140), wherein the telecommunication network (130, 140) comprises a mobile network (130) and/or wherein the telecommunication network (130, 140) comprises a line-based telecommunication network (140), wherein the mobile network (130) comprises an access network (160) and/or the line-based telecommunication network (140) comprises a line-based access network (141), wherein in a first method step device identifiers of the devices (119, 149) are stored in a database (170, 180), wherein in a second step devices (119, 149) are associated with a user (190), wherein the devices (119, 149) comprise a first category of devices which are connected directly to the telecommunication network (130, 140), wherein the devices of the first category (120, 121, 122, 123, 150) are connected directly to the telecommunication network (130, 140) via the access network (160) of the mobile network (130) and/or via the line-based access network (141) of the line-based telecommunication network (140) at least intermittently, wherein the devices (119, 149) comprise a second category of devices which are connected to devices of the first category of devices, wherein the first method step is performed by means of a crawler module, wherein the devices of the second category are reached via the telecommunication network (130, 140) such that the devices of the first category (120, 121, 122, 123, 150) are searched for devices of the second category and/or are indexed by means of the crawler module, wherein in the devices of the second category listed in the database (170, 180) at least one service container is applied.

2. Method as claimed in claim 1, **characterised in that** the devices of the first category (120, 121, 122, 123, 150) are automatically searched for devices of the second category and/or are indexed by means of the crawler module, wherein interfaces and/or operating interfaces which are connected to the devices of second category are identified in this case.

3. Method as claimed in any one of the preceding claims, **characterised in that** the database (170, 180) or parts thereof storing the device identifiers are stored in a database (170) associated with the Home Location Register (HLR) of the mobile network (130) and/or are stored in a database (180) associated with the line-based telecommunication network (140), wherein the database (170, 180) - for the case of the database of the mobile network (130) - is represented by the Home Location Register, the AAA-server, the IMS or a database referencing same.

4. Method as claimed in any one of the preceding claims, **characterised in that** in a first partial step of the first method step a list of devices of the first category (120, 121, 122, 123, 150) is initially present or generated, **in that** in a second partial step of the first method step following the first partial step, the devices of the first category (120, 121, 122, 123, 150) corresponding to the generated list are tested for connections to devices of the second category and successive device identifiers relating to such connections are retrieved and stored in the database (170, 180).

5. Method as claimed in any one of the preceding claims, **characterised in that** in the devices of the first category (120, 121, 122, 123, 150) listed in the database (170, 180) - as part of the second partial step of the first method step - at least one service container is applied, wherein in the at least one service container of one of the devices of the first category (120, 121, 122, 123, 150) at least one software program is installed which looks for operating interfaces or interfaces of the devices of the second category connected to the respective device of the first category (120, 121, 122, 123, 150) and/or logs into said devices and determines or generates device identifiers of devices of the second category for storage in the database (170, 180).

6. Method as claimed in any one of the preceding claims, **characterised in that** the devices of the first category (120, 121, 122, 123, 150) register the devices of the second category connected thereto with the database (170, 180), collect the interface information and/or operating interface information thereof in a data memory and make these interfaces accessible to the database (170, 180).

7. Method as claimed in any one of the preceding claims, **characterised in that** information relating to the devices of the first category (120, 121, 122, 123, 150) and/or the second category which are provided with service containers is exchanged by means of the database (170, 180).

8. Method as claimed in any one of the preceding claims, **characterised in that** the service containers of the devices of the first category (120, 121, 122, 123, 150) regularly query information from the operating interfaces or interfaces of the connected devices of the second category.

9. System for finding and/or for associating devices (119, 149) which interact at least intermittently with a telecommunication network (130, 140) and can be reached via the telecommunication network (130, 140), wherein the system comprises the telecommunication network (130, 140), the devices (119, 149) and a database (170, 180) wherein the telecommunication network (130, 140) comprises a mobile network (130) and/or wherein the telecommunication network (130, 140) comprises a line-based telecommunication network (140), wherein the mobile network (130) comprises an access network (160) and/or the line-based telecommunication network (140) comprises a line-based access network (141), wherein the system is configured such that device identifiers of the devices (119, 149) are stored in the database (170, 180), wherein the system is further configured such that devices (119, 149) are associated with a user (190), wherein the devices (119, 149) comprise a first category of devices which are connected directly to the telecommunication network (130, 140), wherein the devices of the first category (120, 121, 122, 123, 150) are connected directly to the telecommunication network (130, 140) via the access network (160) of the mobile network (130) and/or via the line-based access network (141) of the line-based telecommunication network (140) at least intermittently, wherein the devices (119, 149) comprise a second category of devices which are connected to devices of the first category of devices, wherein the system has a crawler module, wherein the system is configured such that the devices of the second category are reached via the telecommunication network (130, 140) such that the devices of the first category (120, 121, 122, 123, 150) are searched for devices of the second category and/or are indexed by means of the crawler module, wherein the system is further configured such that in the devices of the second category listed in the database (170, 180) at least one service container is applied.

10. Crawler module for finding and/or for associating devices (119, 149) which interact at least intermittently with a telecommunication network (130, 140) and can be reached via a telecommunication network (130, 140), wherein the crawler module is incorporated in a telecommunication network (130, 140) which has the devices (119, 149) and comprises a database (170, 180), wherein the telecommunication network (130, 140) comprises a mobile network (130) and/or wherein the telecommunication network (130, 140) comprises a line-based telecommunication network (140), wherein the mobile network (130) comprises an access network (160) and/or the line-based telecommunication network (140) comprises a line-based access network (141), wherein the crawler module is configured such that device identifiers of the devices (119, 149) are stored in a database (170, 180), wherein the crawler module is further configured such that in a second step devices (119, 149) are associated with a user (190), wherein the devices (119, 149) comprise a first category of devices which are connected directly to the telecommunication network (130, 140), wherein the devices of the first category (120, 121, 122, 123, 150) are connected directly to the telecommunication network (130, 140) via the access network (160) of the mobile network (130) and/or via the line-based access network (141) of the line-based telecommunication network (140) at least intermittently, **characterised in that** the devices (119, 149) comprise a second category of devices which are connected to devices of the first category of devices, wherein the crawler module is configured such that the devices of the second category are reached via the telecommunication network (130, 140), **in that** the devices of the first category (120, 121, 122, 123, 150) are searched for devices of the second category and/or are indexed by means of the crawler module, wherein the crawler module is further configured such that in the devices of the second category listed in the database (170, 180) at least one service container is applied.

11. Computer program comprising program code means, with the aid of which all of the steps of a method as claimed in any one of claims 1 to 8 can be performed if the computer program is executed on a programmable apparatus and/or on a programmable telecommunication terminal and/or a crawler module and/or a database and/or a network node of a telecommunication network (130, 140), in particular partially on a programmable apparatus and/or partially on a programmable telecommunication terminal and/or partially on a crawler module and/or partially on a database and/or partially on a network node of the telecommunication network (130, 140).

12. Computer program product comprising a computer-readable medium and a computer program which is stored on the computer-readable medium and comprises program code means which are adapted such that all of the steps of a method as claimed in any one of claims 1 to 8 can be performed if the computer program is executed on a programmable apparatus and/or on a programmable telecommunication terminal and/or a crawler module and/or a database and/or a network node of a telecommunication network (130, 140), in particular partially on a programmable apparatus and/or partially on a programmable telecommunication terminal and/or partially on a crawler module and/or partially on a database and/or partially on a network node of the telecommunication network (130, 140).

## Revendications

1. Procédé de détection et/ou d'attribution d'appareils (119, 149) qui sont en interaction au moins partiellement avec un réseau de télécommunication (130, 140) et qui peuvent être joints par le biais du réseau de télécommunication (130, 140), le réseau de télécommunication (130, 140) comprenant un réseau radio mobile (130) et/ou le réseau de télécommunication (130, 140) comprenant un réseau de télécommunication (140), le réseau radio mobile (130) comprenant un réseau d'accès (160) et/ou le réseau de télécommunication (140) comprenant un réseau d'accès (141) filaire, des identifiants d'appareil des appareils (119, 149) étant, dans une première étape de procédé, stockés dans une base de données (170, 180), une attribution d'appareils (119, 149) à un utilisateur (190) étant effectuée dans une deuxième étape, les appareils (119, 149) comprenant une première catégorie d'appareils qui sont raccordés directement au réseau de télécommunication (130, 140), les appareils de la première catégorie (120, 121, 122, 123, 150) étant raccordés directement au moins par moments au réseau de télécommunication (130, 140) par le biais du réseau d'accès (160) du réseau radio mobile (130) et/ou par le biais du réseau d'accès (141) filaire du réseau de télécommunication (140) filaire,
les appareils (119, 149) comprenant une deuxième catégorie d'appareils qui sont raccordés à des appareils de la première catégorie d'appareils, la première étape de procédé étant réalisée au moyen d'un module de Crawler, les appareils de la deuxième catégorie étant joints par le biais du réseau de télécommunication (130, 140) de telle sorte que les appareils de la première catégorie (120, 121, 122, 123, 150) peuvent être examinés et/ou indexés au moyen du module de Crawler après des appareils de la deuxième catégorie, au moins un container de services étant placé dans les appareils de la deuxième catégorie qui sont listés dans la base de données (170, 180).

2. Procédé selon la revendication 1, **caractérisé en ce que** les appareils de la première catégorie (120, 121, 122, 123, 150) sont examinés et/ou indexés automatiquement au moyen du module de Crawler après des appareils de la deuxième catégorie, des interfaces et/ou surfaces de commande raccordées aux appareils de la deuxième catégorie étant reconnues à cette occasion.

3. Procédé selon l'une des revendications précédentes, **caractérisé en ce que** la base de données (170, 180) stockant les identifiants d'appareils ou des parties de celle-ci sont stockées dans une base de données (170) attribuée au Home Location Register (HLR) du réseau radio mobile (130) et/ou dans une base de données (180) attribuée au réseau de télécommunication (140) filaire, la base de données (170, 180) étant - dans le cas de la base de données du réseau radio mobile (130) - représentée par le Home Location Register, le AAA-Server, l'IMS ou une base de données qui y fait référence.

4. Procédé selon l'une des revendications précédentes, **caractérisé en ce que**, dans une première étape partielle de la première étape de procédé, une liste d'appareils de la première catégorie (120, 121, 122, 123, 150) est d'abord présente ou est générée, **en ce que**, dans une deuxième étape partielle de la première étape de procédé qui suit la première étape partielle, les appareils de la première catégorie (120, 121, 122, 123, 150) correspondant à la liste générée sont examinés pour rechercher des raccordements à des appareils de la deuxième catégorie, et des identifiants d'appareils successifs concernant de tels raccordements sont appelés et stockés dans la base de données (170, 180).

5. Procédé selon l'une des revendications précédentes, **caractérisé en ce que**, dans les appareils de la première catégorie (120, 121, 122, 123, 150) listés dans la base de données (170, 180) - en tant que partie de la deuxième étape partielle de la première étape de procédé - il est placé au moins un container de services, au moins un programme informatique étant installé dans le container de services au moins au nombre de un de l'un des appareils de la première catégorie (120, 121, 122, 123, 150), lequel programme recherche des surfaces de commande ou des interfaces des appareils de la deuxième catégorie raccordés à l'appareil respectif de la première catégorie (120, 121, 122, 123, 150) et/ou se connecte à celles-ci, de même qu'il détermine ou génère des identifiants d'appareils d'appareils de la deuxième catégorie en vue du stockage dans la base de données (170, 180).

6. Procédé selon l'une des revendications précédentes, **caractérisé en ce que** les appareils de la première catégorie (120, 121, 122, 123, 150) signalent à la base de données (170, 180) les appareils de la deuxième catégorie qui leur sont raccordés, collectent dans une mémoire de données leurs informations d'interfaces et/ou informations de surfaces de commande et rendent accessible ces interfaces à la base de données (170, 180).

7. Procédé selon l'une des revendications précédentes, **caractérisé en ce que**, au moyen de la base de données (170, 180), des informations portant sur les appareils de la première catégorie (120, 121, 122, 123, 150) et/ou de la deuxième catégorie munis de containers de services sont échangées.

8. Procédé selon l'une des revendications précédentes, **caractérisé en ce que** les containers de services des appareils de la première catégorie (120, 121, 122, 123, 150) appellent régulièrement des informations en provenance des surfaces de commande ou des interfaces des appareils raccordés de la deuxième catégorie.

9. Système de détection et/ou d'attribution d'appareils (119, 149) qui sont au moins par moments en interaction avec un réseau de télécommunication (130, 140) et qui peuvent être joints par le biais du réseau de télécommunication (130, 140), le système comprenant le réseau de télécommunication (130, 140), les appareils (119, 149) et une base de données (170, 180), le réseau de télécommunication (130, 140) comprenant un réseau radio mobile (130) et/ou le réseau de télécommunication (130, 140) comprenant un réseau de télécommunication (140) filaire, le réseau radio mobile (130) comprenant un réseau d'accès (160) et/ou le réseau de télécommunication (140) filaire comprenant un réseau d'accès (141) filaire, le système étant configuré de telle sorte que des identifiants d'appareils des appareils (119, 149) sont stockés dans la base de données (170, 180), le système étant en outre configuré de telle sorte qu'une attribution d'appareils (119, 149) à un utilisateur (190) est effectuée, les appareils (119, 149) comprenant une première catégorie d'appareils qui sont raccordés directement au réseau de télécommunication (130, 140), les appareils de la première catégorie (120, 121, 122, 123, 150) étant raccordés au moins par moments directement au réseau de télécommunication (130, 140) par le biais du réseau d'accès (160) du réseau radio mobile (130) et/ou par le biais du réseau d'accès (141) filaire du réseau de télécommunication (140) filaire, les appareils (119, 149) comprenant une deuxième catégorie d'appareils qui sont raccordés à des appareils de la première catégorie d'appareils, le système comportant un module de Crawler, le système étant configuré de telle sorte que les appareils de la deuxième catégorie sont joints par le biais du réseau de télécommunication (130, 140) de telle sorte que les appareils de la première catégorie (120, 121, 122, 123, 150) sont examinés et/ou indexés au moyen du module de Crawler après des appareils de la deuxième catégorie, le système étant en outre configuré de telle sorte qu'au moins un container de services est placé dans les appareils de la deuxième catégorie qui sont listés dans la base de données (170, 180).

10. Module de Crawler destiné à la détection et/ou l'attribution d'appareils (119, 149) qui sont au moins par moments en interaction avec un réseau de télécommunication (130, 140) et qui peuvent être joints par le biais d'un réseau de télécommunication (130, 140), le module de Crawler étant intégré dans un réseau de télécommunication (130, 140) comportant les appareils (119, 149) avec une base de données (170, 180), le réseau de télécommunication (130, 140) comprenant un réseau radio mobile (130) et/ou le réseau de télécommunication (130, 140) comprenant un réseau de télécommunication (140) filaire, le réseau radio mobile (130) comprenant un réseau d'accès (160) et/ou le réseau de télécommunication (140) filaire comprenant un réseau d'accès (141) filaire, le module de Crawler étant configuré de telle sorte que des identifiants d'appareils des appareils (119, 149) sont stockés dans une base de données (170, 180), le module de Crawler étant en outre configuré de telle sorte qu'une attribution d'appareils (119, 149) à un utilisateur (190) est effectuée dans une deuxième étape, les appareils (119, 149) comprenant une première catégorie d'appareils qui sont raccordés directement au réseau de télécommunication (130, 140), les appareils de la première catégorie (120, 121, 122, 123, 150) étant raccordés au moins par moments directement au réseau de télécommunication (130, 140) par le biais du réseau d'accès (160) du réseau radio mobile (130) et/ou par le biais du réseau d'accès (141) filaire du réseau de télécommunication (140) filaire, **caractérisé en ce que** les appareils (119, 149) comprennent une deuxième catégorie d'appareils qui sont raccordés à des appareils de la première catégorie d'appareils, le module de Crawler étant configuré de telle sorte que les appareils de la deuxième catégorie sont joints par le biais du réseau de télécommunication (130, 140) de telle sorte que les appareils de la première catégorie (120, 121, 122, 123, 150) sont examinés et/ou indexés au moyen du module de Crawler après des appareils de la deuxième catégorie, le module de Crawler étant en outre configuré de telle sorte qu'au moins un container de services est placé dans les appareils de la deuxième catégorie qui sont listés dans la base de données (170, 180).

11. Programme informatique avec des moyens de code de programme à l'aide desquels toutes les étapes d'un procédé selon l'une des revendications 1 à 8 peuvent être réalisées quand le programme informatique est exécuté sur un équipement programmable et/ou sur un terminal de télécommunication programmable et/ou sur un module de Crawler et/ou dans une base de données et/ou sur un noeud de réseau d'un réseau de télécommunication (130, 140), en particulier partiellement sur un équipement programmable et/ou partiellement sur un terminal de télécommunication programmable et/ou partiellement sur un module de Crawler et/ou partiellement dans une base de données et/ou partiellement sur un noeud de réseau du réseau de télécommunication (130, 140).

12. Produit de programme informatique avec un support lisible par ordinateur et avec un programme informatique stocké sur le support lisible par ordinateur, avec des moyens de code de programme qui sont appropriés pour que toutes les étapes d'un procédé selon l'une des revendications 1 à 8 puissent être réalisées quand le programme informatique est exécuté sur un équipement programmable et/ou sur un terminal de télécommunication programmable et/ou sur un module de Crawler et/ou dans une base de données et/ou sur un noeud de réseau d'un réseau de télécommunication (130, 140), en particulier partiellement sur un équipement programmable et/ou partiellement sur un terminal de télécommunication programmable et/ou partiellement sur un module de Crawler et/ou partiellement dans une base de données et/ou partiellement sur un noeud de réseau du réseau de télécommunication (130, 140).
